# EUROPEAN PATENT APPLICATION

(11) **EP 3 522 280 A1**
(43) Date of publication of application: **07.08.2019**
(21) Application number: 17856774.9
(22) Date of filing: 28.09.2017
(51) Int. Cl.: H01M 8/18, H01M 8/20, H01M 8/04223, H01M 8/04955

(54) **REDOX FLOW CELL**

(30) Priority: 30.09.2016 KR 20160126936
(71) Applicant: Lotte Chemical Corporation, Seoul 05551 (KR)
(72) Inventor: JANG, Hyeon-Seok, Daejeon 34120 (KR); KIM, Dae-Sik, Daejeon 34120 (KR); HAN, Dong Hwa, Goyang-si Gyeonggi-do 10475 (KR); JEONG, Jin Kyo, Daejeon 34120 (KR); SEO, Dong Kyun, Seoul 08327 (KR)
(74) Representative: Agasse, Stéphane
(86) International application number: PCT/KR2017/010799
(87) International publication number: WO 2018/062888

(57) **Abstract**

A redox flow battery including a plurality of electrically connected stacks is provided. A plurality of stacks are alternately connected by electrical connecting lines, with at least one stack therebetween.

## Description

### [Technical Field]

The present invention relates to a redox flow battery, and more particularly, to a technology for reducing shunt current generation.

### [Background Art]

There is currently research into a variety of batteries for use in energy storage systems (ESS). Lithium-ion batteries (LIBs) have come close to commercialization, but have not been fully approved with regard to stability and lifespan. Thus, flow batteries are being actively developed, including redox flow batteries (RFBs).

A redox flow battery is a cell that uses a chemical reaction between a pair of an oxidizing agent and a reducing agent (redox couple). A Zn-Br flow battery is a type of redox flow battery using zinc and bromine as the pair of an oxidizing agent and a reducing agent (redox couple) that is based on a chemical reaction within a stack, and has advantages in terms of output, degree of capacity freedom retention, and price.

A redox flow battery includes a stack formed by repeatedly stacking bipolar electrodes and membranes and sequentially stacking a current collector and an end cap on both sides of the outermost part of the stacked bipolar electrodes and membranes, and electrolyte tanks that supply an electrolyte to the stack and store an electrolyte flowing out of the stack after an internal reaction.

However, cells where electrochemical reactions in redox flow batteries take place are connected in series by a bipolar structure, and they share the same electrolyte in a parallel configuration, thus generating a shunt current flowing to the electrolyte.

Notably, there is an imbalance of shunt current flowing to an electrolyte in stacks and pipes during a chemical reaction, resulting in a loss of energy from the stack.

Moreover, when a shunt current is generated, it reduces uniform distribution of zinc, thereby degrading the performance of the battery. In addition, it causes corrosion of electrodes or parts and therefore reduces battery life and inhibits electrolyte movement due to zinc deposition failure, and creates too much reaction between reactants, resulting in a thermal loss.

### [DISCLOSURE]

### [Technical Problem]

The present invention has been made in an effort to provide a redox flow battery that can minimize or reduce the generation of a shunt current by varying electrical connecting lines between stacks sharing the same electrolyte.

### [Technical Solution]

An exemplary embodiment of the present invention provides a redox flow battery including a plurality of electrically connected stacks, wherein the plurality of stacks are alternately connected by electrical connecting lines, with at least one stack therebetween.

The plurality of stacks may be connected via electrical connecting lines between stacks that do not share the same electrolyte.

The plurality of stacks may be connected in series via electrical connecting lines.

The plurality of stacks may include a plurality of pairs of stacks consecutively connected by electrical connecting lines, with at least one stack therebetween, each of the plurality of pairs of stacks including an on-off switch installed on an electrical wire connecting two stacks, wherein each on-off switch may be turned on or off under control of a battery management system by a stack voltage formed by each pair of stacks.

Another exemplary embodiment of the present invention provides an operation method for a battery management system, the method including: measuring the stack voltage for each pair of stacks consecutively connected by an electrical wire, with at least one stack therebetween; and comparing a first stack voltage, which is one of the stack voltages, with the other stack voltages, and controlling the turn-on or turn-off of the on-off switch installed on the electrical wire according to the comparison results.

In the controlling, if the voltage difference between the first stack voltage and at least one of the other stack voltages is equal to or larger than a preset threshold voltage, the on-off switch installed on the electrical wire for the stack pair having the first stack voltage may be turned off, and if the voltage difference between the first stack voltage and at least one of the other stack voltages is smaller than the threshold voltage, the on-off switch may be turned on.

### [Advantageous Effects]

According to the present invention, it is possible to solve the problem of energy loss in the stacks caused by an imbalance of shunt current.

### [Description of the Drawings]

FIG. 1 is a diagram showing a configuration of a redox flow battery according to an exemplary embodiment of the present invention.
FIG. 2A and FIG. 2B are diagrams for explaining a shunt current.
FIG. 3 shows a redox flow battery stack connecting structure for reducing a shunt current according to an exemplary embodiment of the present invention.
FIG. 4 and FIG. 5 show the results of a test of an electrical connecting structure for the stacks of FIG. 3.
FIG. 6 shows a redox flow battery stack connecting structure for reducing a shunt current according to another exemplary embodiment of the present invention.
FIG. 7 shows a serial stack structure for comparison with an exemplary embodiment of the present invention.
FIG. 8 and FIG. 9 are views showing a current structure in the serial stack structure of FIG. 7.
FIG. 10 shows a definition of a resistance caused by shunt current generation according to an exemplary embodiment of the present invention.
FIG. 11 illustrates a test bed.
FIG. 12 shows a structure for electrically connecting ten stacks in series (shunt generation reference) according to the test-bed structure of FIG. 11.
FIG. 13 shows the results of a test of the structure for electrically connecting stacks shown in FIG. 11.
FIG. 14 shows the results (A) of a test of the structure for electrically connecting stacks shown in FIG. 11.
FIG. 15 and FIG. 16 are views showing the amount of shunt current generation for each connecting line in a structure for electrically connecting five stacks in series.
FIG. 17 is a view showing the amount of a shunt current increase with the increasing number of stacks that are electrically connected in series.
FIG. 18 shows test results for each distance when two stacks are electrically connected in series.
FIG. 19 shows test results for each distance when three stacks are electrically connected in series.
FIG. 20 shows a shunt current generation test for each pipe distance.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

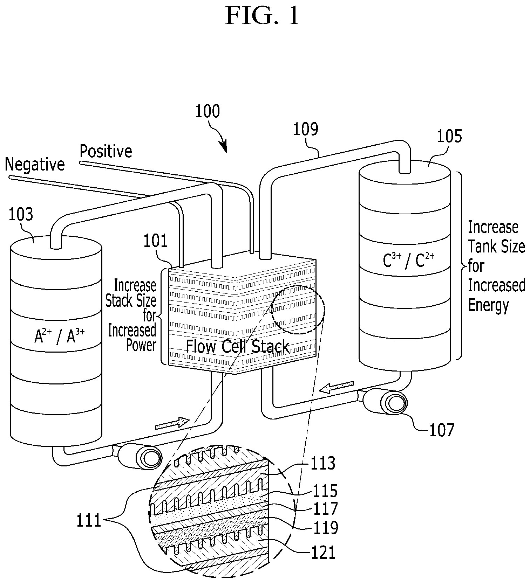

FIG. 1 is a diagram showing a configuration of a redox flow battery according to an exemplary embodiment of the present invention.

Referring to FIG. 1, the redox flow battery 100 includes a stack 101, a positive electrolyte (A²⁺/A³⁺) tank 103, a negative electrolyte (B³⁺/B²⁺) tank 105, pumps 107, and pipes 109.

The stack 101 is a pile of a plurality of cells. Each cell has a stack structure where a bipolar plate 111 includes a positive electrode 113, a positive electrolyte 115, an ion-exchange membrane 117, a negative electrolyte 119, and a negative electrode 121 that are sequentially stacked.

Although not shown, a current collector and an end plate are placed on the sides of the positive and negative electrodes 113 and 121 on the outermost parts of the stack 101. Although FIG. 1 depicts one stack 101, a plurality of stacks 101 are used by connecting them in series or in parallel in order to increase the output of the redox flow battery 100.

The positive electrolyte tank 103 supplies the positive electrolyte stored in it to the positive electrode 113 by running a pump 107. The negative electrolyte tank 105 supplies the negative electrolyte stored in it to the negative electrode 121 by running a pump 107.

In the redox flow battery 100, the flow of electrolyte is important. An electrolyte pumped through the pump 107 is moved to a manifold with a flow path and then to the electrodes 113 and 121 where oxidation and reduction reactions occur.

In this case, if the flow characteristics of the electrolyte are not uniform, there may be a velocity difference at the reacting portions 113 and 121 or there may be an overvoltage at non-reacting portions.

In a redox flow battery based on chemical reactions in an electrolyte through which current may flow, a shunt current is inevitable.

A shunt current is generated because, when the standby time of the redox flow battery increases, the battery self-discharges as the active materials in the electrolyte present within the stack 101 move to the opposite side through the ion-exchange membrane 117.

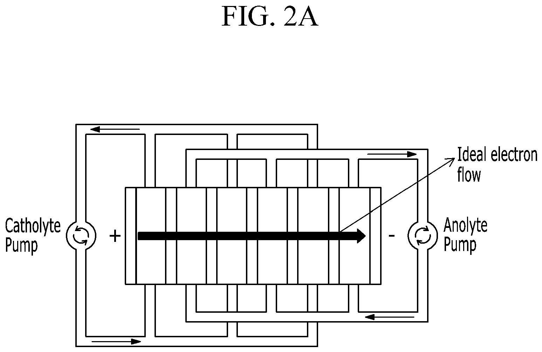

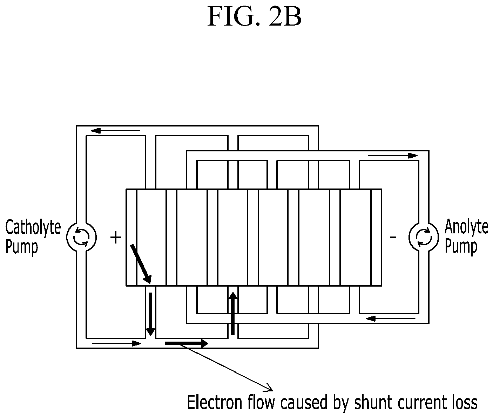

FIG. 2A and FIG. 2B are diagrams for explaining a shunt current.

That is, as shown in FIG. 2A, an ideal electron flow occurs within the stack 101, but it turns into a flow as shown in FIG. 2B if a shunt current is generated.

The pattern of the shunt current varies with the path through which the electrolyte flows, and the electrolyte passes through a channel within the stack 101, the manifold which is an inlet path created by connecting cells in series, and the pipes 109 connected to the stack 101.

Although not shown, manifolds shared by stacks 101 are formed by connecting the pipes 109 located at the inlets of the stacks 101 and the pipes 109 located at the outlets of the stacks 101 with a straight line.

An exemplary embodiment of the present invention proposes a method for reducing the shunt current. If stacks 101 share a large number of manifolds in series, then the amount of shunt current generation is also large.

Thus, a method for internally reducing the shunt current in electrical connecting lines when stacks 101 are connected in series is proposed.

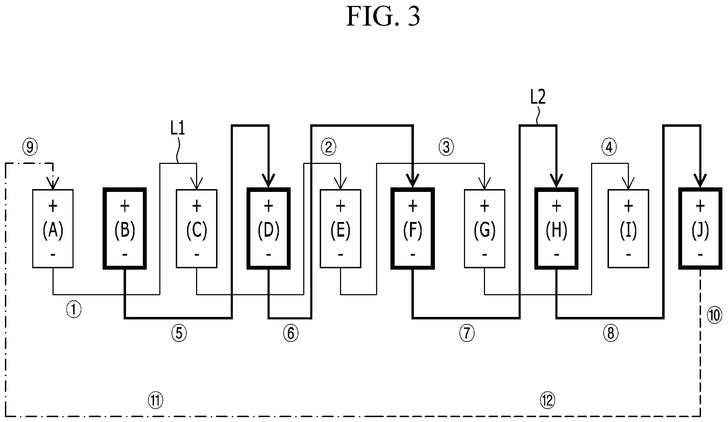

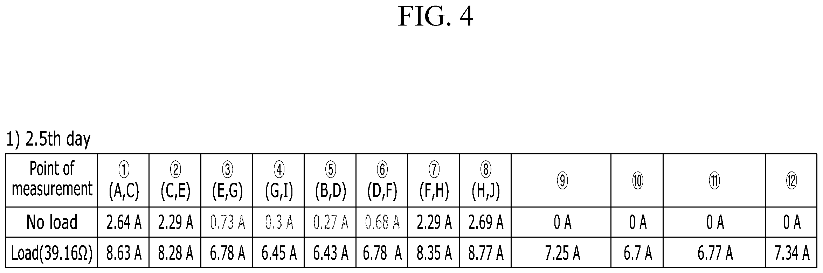

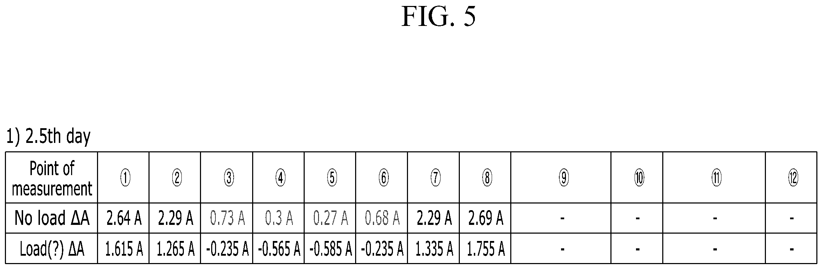

FIG. 3 shows a redox flow battery stack connecting structure for reducing a shunt current according to an exemplary embodiment of the present invention. FIG. 4 and FIG. 5 show the results of a test of an electrical connecting structure for the stacks of FIG. 3.

Referring to FIG. 3, in a structure where ten stacks, i.e., a stack (A), a stack (B), a stack (C), a stack (D), a stack (E), a stack (F), a stack (G), a stack (H), a stack (I), and a stack (J) are sequentially arranged in series, the stack (A), the stack (C), the stack (E), the stack (G), and the stack (I) are connected by electrical wires L1, and the stack (B), the stack (D), the stack (F), the stack (H), and the stack (J) are connected by electrical wires L2.

Here, the electrical wires L1 consist of a first electrical wire ① connecting the stack (A) and the stack (C), a second electrical wire ② connecting the stack (C) and the stack (E), a third electrical wire ③ connecting the stack (E) and the stack (G), and a fourth electrical wire ④ connecting the stack (G) and the stack (I).

The electrical wires L2 consist of a first electrical wire ⑤ connecting the stack (B) and the stack (D), a second electrical wire ⑥ connecting the stack (D) and the stack (F), a third electrical wire ⑦ connecting the stack (F) and the stack (H), and a fourth electrical wire ⑧ connecting the stack (H) and the stack (J).

In this case, a positive electrode line ⑨ connected to the positive electrode of the stack (A) is connected to a negative electrode line ⑩ connected to the negative electrode of the stack (J).

As such, a shunt current caused by connecting the manifolds in series may be reduced by spacing the electrical wires apart from each other by a distance of 1 stack.

In this case, stacks 101 that do not share the same electrolyte may be connected by the electrical wires L1 and L2.

Such a structure in which the wires are spaced apart from each other by a distance of 1 stack is based on the difference in the amount of shunt current generation between when manifolds sharing the same electrolyte are electrically connected in series or when they are not. That is, stacks that do not share the same electrolyte, which is the cause of a shunt, are electrically connected in order to reduce shunt resistance.

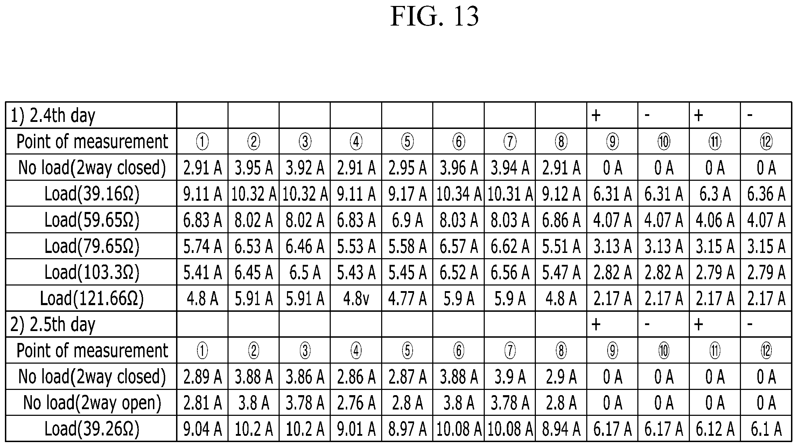

As compared with FIG. 13 to be described later, when there is no load, the shunt current measurement at ① was 2.64 A when five stacks are consecutively connected in series, whereas the shunt current measurement at ① was 2.91 A in FIG. 13, which shows a reduction in the amount of shunt current when there is no load.

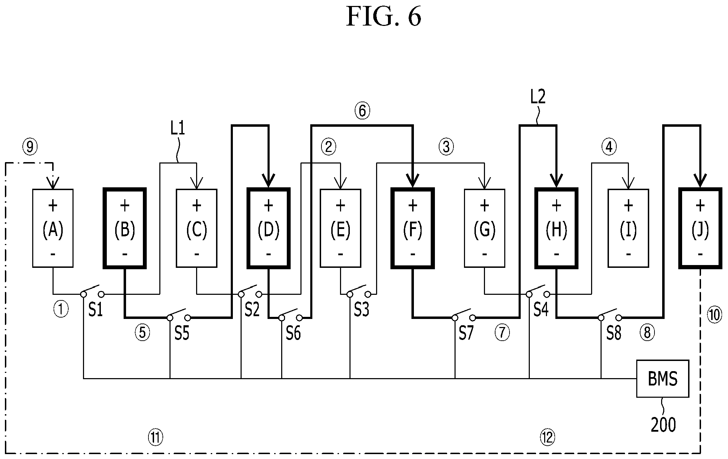

FIG. 6 shows a redox flow battery stack connecting structure for reducing a shunt current according to another exemplary embodiment of the present invention.

Referring to FIG. 6, although the stack connecting structure is the same as that shown in FIG. 3, a charge imbalance between each stack may be eliminated by connecting on-off switches S1, S2, S3, S4, S5, S6, S7, and S8 to the electrical wires L1 and L2 connected between the stacks 101.

Here, the on-off switches S1, S2, S3, S4, S5, S6, S7, and S8 are connected to a BMS (Battery Management System) 200. They are turned on (Open) or off (Closed) under the operational control of the BMS 200.

The BMS 200 compares stack voltages. Then, the measured voltages are compared with one another.

If the results of comparison of the measured cell voltages show that a certain stack voltage is higher or lower than another stack voltage by a threshold value or higher, the BMS 200 turns the on-off switches of the wires to which the corresponding stack is connected on or off.

If the stack voltage difference is equal to or larger than the threshold value, the switches are kept turned off (closed). If the stack voltage difference is smaller than the threshold value, the switches are kept turned on (open) during the time in which the stack maintains a balance with the other stacks.

For example, if the measured voltage of the stack (C) is higher than the other stacks by the threshold value or higher, the switches S1 and S2 of the wires ① and ② to which the stack (C) is connected are turned off. The switches S1 and S2 are kept turned off during the time in which the voltage of the stack (C) maintains a balance with the voltages of the other stacks. That is, the switches S1 and S2 are kept turned off until the differences between the voltage of the stack (C) and the voltages of the other stacks become smaller than the threshold value.

As stated above, in an exemplary embodiment of the present invention, stacks are spaced apart from each other by a distance of 1 stack, which is based on the difference in the amount of shunt current generation between when manifolds sharing the same electrolyte are electrically connected in series or when they are not. This difference will be explained through the following test results.

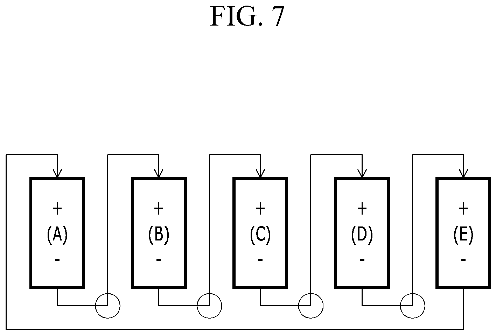

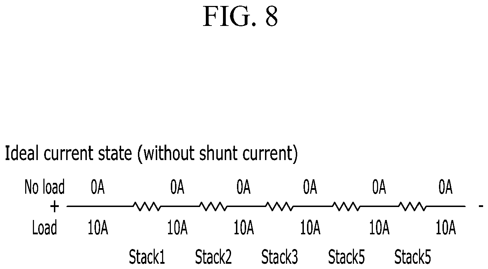

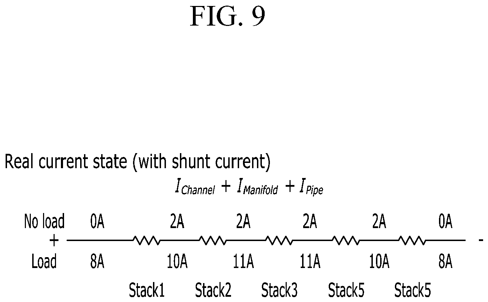

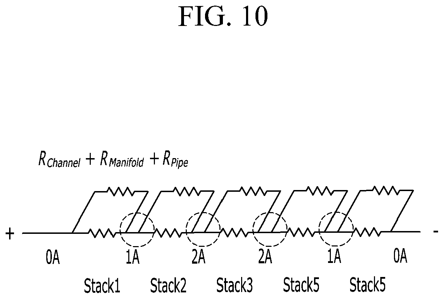

First of all, FIG. 7 shows a serial stack structure for comparison with an exemplary embodiment of the present invention. FIG. 8 and FIG. 9 are views showing a current structure in the serial stack structure of FIG. 7. FIG. 10 shows a definition of a resistance caused by shunt current generation according to an exemplary embodiment of the present invention.

Referring to FIG. 7, five stacks, i.e., a stack (A), a stack (B), a stack (C), a stack (D), and a stack (E), are arranged in series. In a case where these five stacks are electrically connected in series, current measurements in the stack structure are as shown in FIG. 8 and FIG. 9.

By arranging five stacks or cells in series or allowing them to share the same electrolyte, the current flow between the electrical wiring lines may be in an ideal state.

Referring to FIG. 8, in an ideal state serial connection via electrical connecting lines, it is observed that the current between the stacks is 0 A across all the stacks when there is no load and that the current between the stacks is 10 A across all the stacks when there is a load. This means that no internal shunt current is generated, that is, there is no loss.

Referring to FIG. 9, it is possible to detect the amount of current when an actual shunt current is generated.

In an actual test (real state), it can be seen that, as shown in FIG. 9, the current generated in the connecting lines between the stacks and the current at the output connected to DC-Link are different. This means that a shunt current is generated within the stack. Notably, it can be observed that, when there is no load, an internal current of 2 A to 3 A flows but the current at the output is 0 A, and that when there is a load, an internal current of 10 A or 11 A is generated and the current at both ends is 8 A.

In this case, the internal current of 2 A to 3 A is a current caused by shunt resistance, and current flows due to the internal shunt resistance even when there is no load.

Accordingly, the types of shunt current and resistance may be defined by the aforementioned three types of components. These three types of components are a channel, a manifold, and a pipe. The channel, which is a path through which an electrolyte passes, is a flow path within a stack, the manifold is a segment sharing the entrance to the flow path, and the pipe is a space where the electrolyte is carried and pumped into the stack.

Shunt resistance, which is a resistance caused by the generation of a shunt current, may be defined as shown in FIG. 10. That is, the shunt resistance may be R_{Channel}, R_{Manifold}, or R_{Pipe}.

As for current measurement, the current in the electrical wires (indicated by O) between the stacks of FIG. 7, that is, the current in the electrical connecting lines connecting the stacks, was measured.

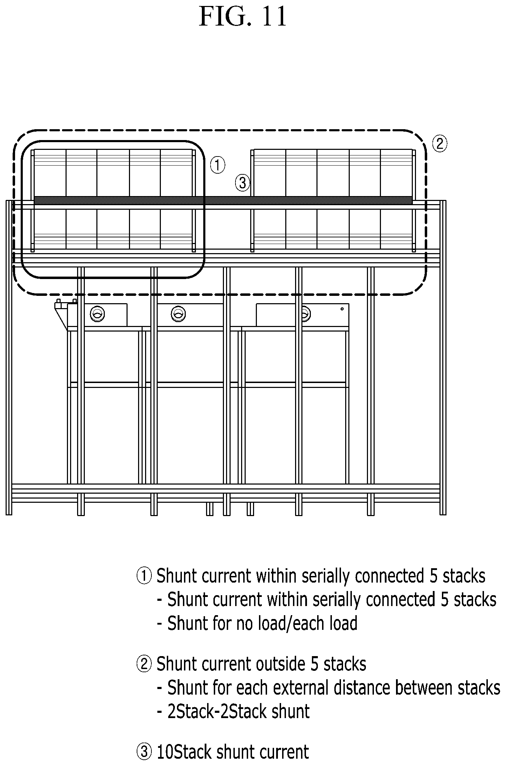

FIG. 11 illustrates a test bed. The test bed was equipped with ten stacks consisting of two serial sets of five stacks in order to analyze the pattern of the shunt current.

A flow path within a cell was designated as a fixed parameter (channel shunt), and the test was performed to find a pattern of shunt current according to the number of serial connections of stacks (manifold shunt) or the pipe distance (pipe shunt).

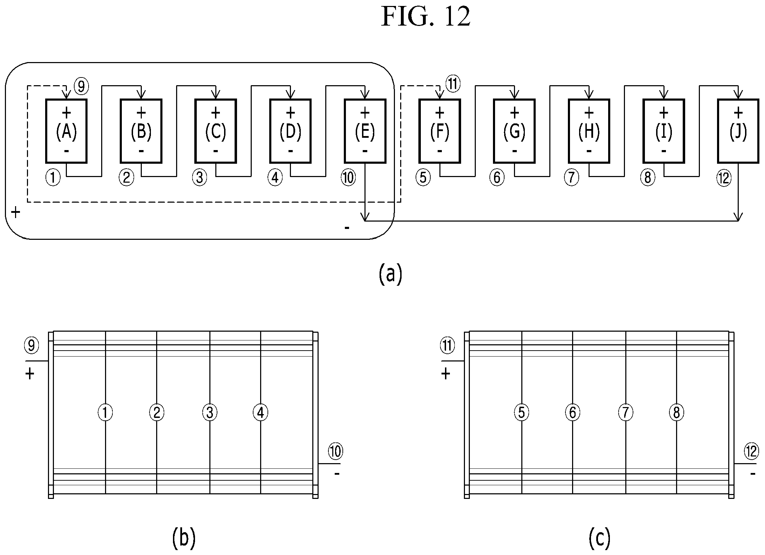

FIG. 12 shows a structure for electrically connecting stacks (shunt generation reference) structure of ten stacks according to the test-bed structure of FIG. 11.

(a) of FIG. 12 shows a first set of five stacks sharing the same electrolyte, i.e., a stack (A), a stack (B), a stack (C), a stack (D), and a stack (E) connected in series, and a second set of five stacks sharing the same electrolyte, i.e., a stack (F), a stack (G), a stack (H), a stack (I), and a stack (J) connected in series. The first set is as shown in (b) of FIG. 12, and the second set is as shown in (c) of FIG. 12.

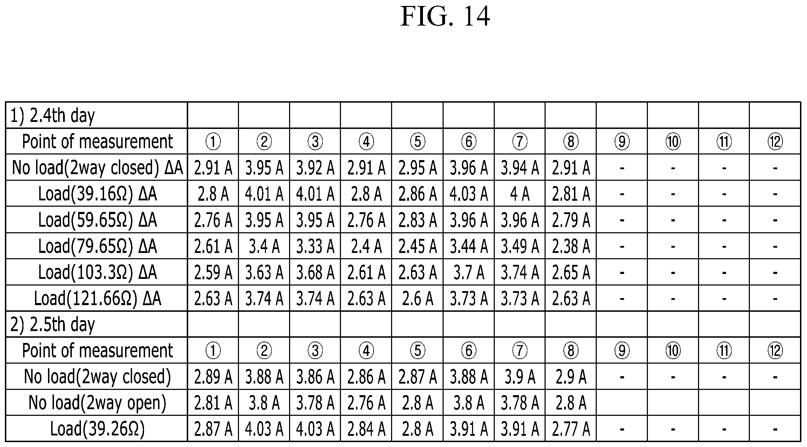

FIG. 13 shows the results of a test of the structure for electrically connecting stacks shown in FIG. 11. FIG. 14 shows the results (A) of a test of the structure for electrically connecting stacks shown in FIG. 11.

When ten stacks sharing the same electrolyte are electrically connected in series as shown in FIG. 13, the value A which is an estimated shunt current is as shown in FIG. 14.

FIG. 13 depicts the measurements taken in the test, and FIG. 14 depicts the results of shunt current estimation based on the test measurements.

The results show that, when there is no load, an internal current flows but the lines 9, 10, 11, and 12 have a current of 0 A, and when there is a load, the difference in the amount of current between the lines is as much as the amount of shunt current generated when there is no load.

When there is no load, the amount of electric current is defined as the value A, and when there is a load, the amount of electrical current except those at the lines ⑨, ⑩, ⑪, and ⑫ are defined as the value A (shunt current).

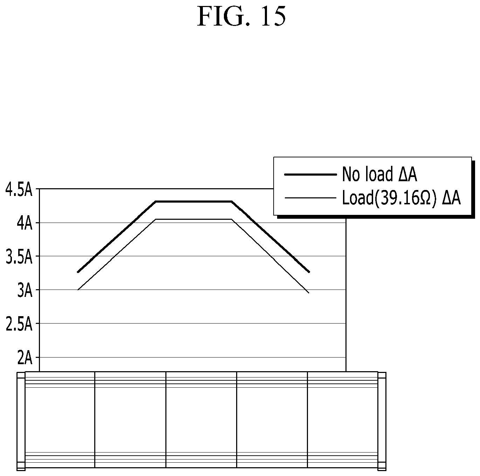

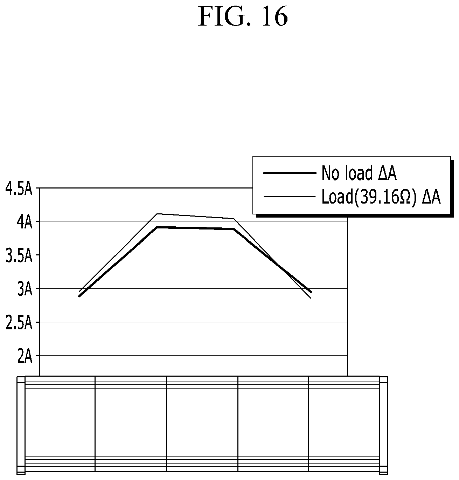

FIG. 15 and FIG. 16 are views showing the amount of shunt current generation for each connecting line in a structure for electrically connecting five stacks in series.

Referring to FIG. 15 and FIG. 16, the results of an electrical connection test of the structure for electrically connecting five stacks in series show that the amount of shunt current generation at each position increases towards the stacks at the center. The amount of shunt current generation in the load state and the amount of shunt current generation in the no-load state were similar, that is, approximately 2 A to 4 A.

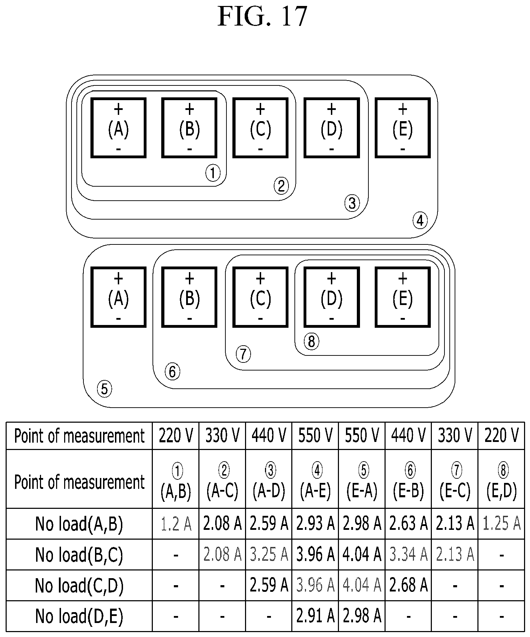

FIG. 17 is a view showing the amount of shunt current increasing with the increasing number of stacks electrically connected in series.

Referring to FIG. 17, an electrical connection is made by varying the number of serial connections between neighboring stacks sharing the same electrolyte, and data results of a test of this connecting structure are shown.

There are two electrically connected stacks for ① , i.e., the stack (A) and the stack (B), there are three electrically connected stacks for ②, i.e., the stack (A), the stack (B), and the stack (C), there are four electrically connected stacks for ③, i.e., the stack (A), the stack (B), the stack (C), and the stack (D), and there are five electrically connected stacks for ④, i.e., the stack (A), the stack (B), the stack (C), the stack (D), and the stack (E).

There are five electrically connected stacks for ⑤, i.e., the stack (A), the stack (B), the stack (C), the stack (D), and the stack (E), there are four electrically connected stacks for ⑥, i.e., the stack (A), the stack (B), the stack (C), and the stack (D), there are three electrically connected stacks for ⑦, i.e., the stack (A), the stack (B), and the stack (C), and there are two electrically connected stacks for ⑧, i.e., the stack (A) and the stack (B).

In this case, the measurement results obtained by varying the point of measurement for each number of electrically connected stacks show that the amount of shunt current increases with the increasing number of electrically connected stacks, and also increases towards the center of the overall stack structure.

For example, it can be seen that, when there is no load (1, 2), the number of connected stacks increases as the point of measurement goes in the order: ①- > ② -> ③-> ④ and the amount of shunt current increases in the order: 1.2 A -> 2.08 A -> 2.59 A -> 2.93 A.

Moreover, for the point of measurement ④, when there is no load (1, 2), the amount of shunt current is 2.93 A, when there is no load (2, 3), the amount of shunt current is 3.96 A, when there is no load (3, 4), the amount of shunt current is 3.96 A, and when there is no load (4, 5), the amount of shunt current is 2.91 A. This indicates that, when there is no load, the amount of shunt current at the points of measurement (2, 3) and (3, 4) near the center is larger than that at the points of measurement (1, 2) and (4, 5) near the edge.

In addition, it can be observed that the amount of shunt current increases by approximately 1 A per serially connected stack.

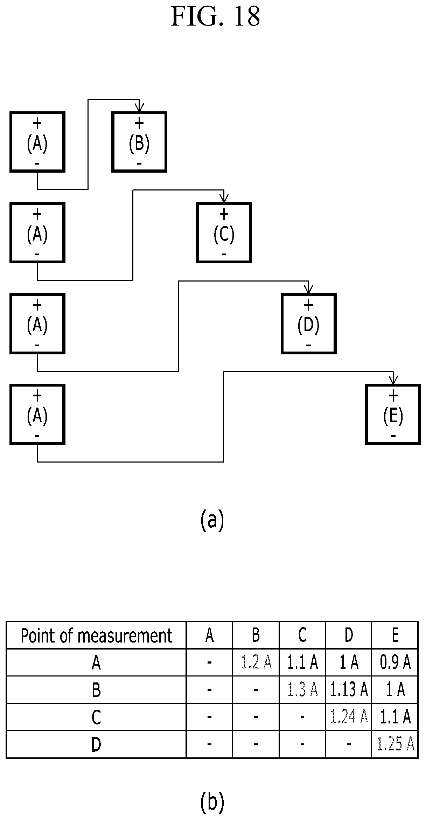

Next, a test was performed after an electrical connection was made, as shown in FIG. 18, in order to find a pattern of shunt current at each position when two stacks are connected in series.

FIG. 18 shows test results for each distance when two stacks are electrically connected in series.

Referring to FIG. 18, the amount of shunt current was 1.2 A for the stacks (1)-(2), the amount of shunt current was 1.3 A for the stacks (2)-(3), the amount of shunt current was 1.23 A for the stacks (3)-(4), and the amount of shunt current for the stacks (4)-(5) was 1.25 A. That is, the amount of shunt current generated when two stacks are serially connected ranges from 1.2 A to 1.3 A. By connecting stacks situated in close distance in series, the manifolds are lengthened, thereby increasing the amount of shunt current.

On the other hand, the amount of shunt current was 1.1 A for the stacks (1)-(3), the amount of shunt current was 1 A for the stacks (1)-(4), the amount of shunt current was 0.9 A for the stacks (1)-(5), the amount of shunt current for the stacks (2)-(4) was 1.13 A, and the amount of shunt current for the stacks (3)-(5) was 1.1 A. That is, the amount of shunt current decreases as the distance between two stacks becomes longer.

In this case, when two stacks are connected with one stack between them, the amount of shunt current tends to decrease by approximately 0.1 A for each skipped stack.

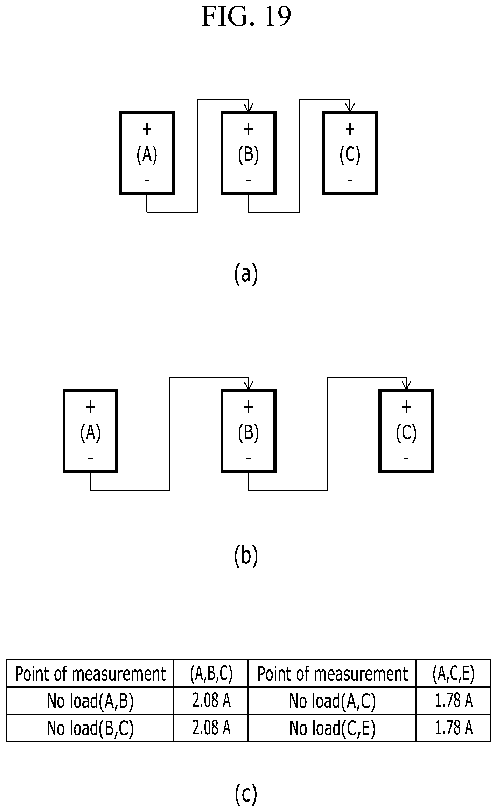

FIG. 19 shows test results for each distance when three stacks are electrically connected in series.

That is, the test results show a pattern of shunt current at each position for three stacks.

Referring to (a) of FIG. 19, the stack (A), the stack (B), and the stack (C) are connected in series, and referring to (b) of FIG. 19, the stack (A), the stack (C), and the stack (E) are connected in series with one stack between the two of them.

The shunt current measurement in (a) of FIG. 19 is 2.08 A, and the shunt current measurement in (b) of FIG. 19 is 1.75 A, which indicates a decrease in the amount of shunt current.

That is, when there is no load, the amount of shunt current was 2.08 A when three stacks are connected in series, whereas the amount of shunt current was approximately 0.75 A when two of the three stacks are spaced apart from each other by a distance of one stack, which indicates a decrease of approximately 0.33 A in the amount of shunt current.

In comparison with the previous test for each distance when two stacks are electrically connected in series (FIG. 18), it can be seen that the test shows an increase of 1 A due to the addition of one stack but a decrease of approximately 0.1 A to 0.15 A due to the distance of one stack.

From this, it can be inferred that, when the stacks share the same electrolyte in series, the amount of shunt current decreases if the manifolds are spaced apart from each other.

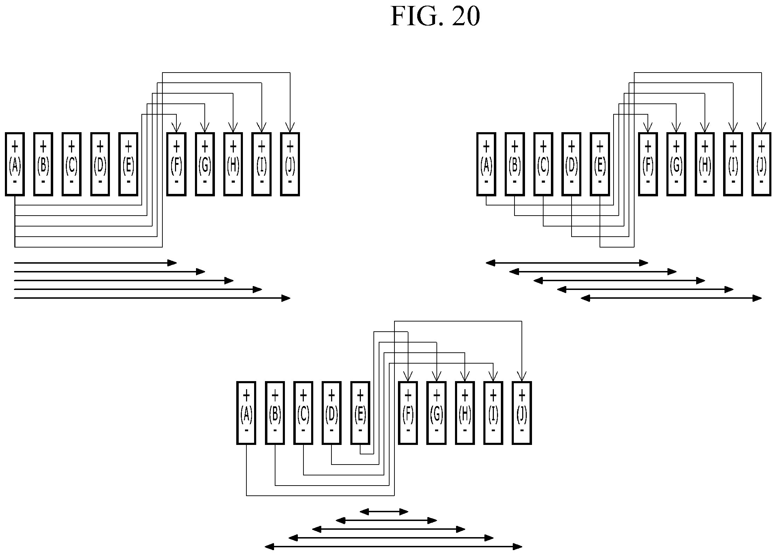

FIG. 20 shows a shunt current generation test for each pipe distance.

In this drawing, ten stacks are connected as indicated by →, and the two-headed arrows indicate the pipe distance.

Referring to FIG. 20, the test was performed to find a pattern of shunt current generated due to the electrolyte in the pipes, and the differences in the amount of shunt current were not large (A=0.09).

It can be seen that, when the stacks are spaced too far from each other, the amount of shunt current generation increases further. That is, the farther the stacks are from each other, the longer the pipe distance.

Based on the test results explained with reference to FIGS. 7 through 20, it can be found that the electrical connecting structure according to an exemplary embodiment of the present invention can reduce the amount of shunt current.

Moreover, the existing amount of shunt current generated when stacks sharing the same electrolyte are connected in series was 2 A to 4 A, which can be reduced to between 1 A and 2 A.

In addition, it can be found that the amount of shunt current was much smaller when five stacks sharing the same electrolyte are electrically connected in series.

Although, in the conventional art, electrical connecting lines for serially connected stacks are connected in series, an exemplary embodiment of the present invention allows for varying the electrical connecting lines and therefore may decrease the amount of shunt current caused by manifolds sharing the same electrolyte, among all the components that may cause a shunt current, including the channels, manifolds, or pipes for the electrolyte, in order to overcome the loss caused by shunt current generated by the electrolyte.

## Claims

1. A redox flow battery including a plurality of electrically connected stacks,
wherein the plurality of stacks are alternately connected by electrical connecting lines, with at least one stack therebetween.

2. The redox flow battery of claim 1, wherein the plurality of stacks are connected via electrical connecting lines between stacks that do not share the same electrolyte.

3. The redox flow battery of claim 1, wherein the plurality of stacks are connected in series via electrical connecting lines.

4. The redox flow battery of claim 1, wherein the plurality of stacks comprise a plurality of pairs of stacks consecutively connected by electrical connecting lines, with at least one stack therebetween,
each of the plurality of pairs of stacks comprising an on-off switch installed on an electrical wire connecting two stacks,
wherein each on-off switch is turned on or off under control of a battery management system by a stack voltage formed by each pair of stacks.

5. An operation method for a battery management system, the method comprising:
measuring the stack voltage for each pair of stacks consecutively connected by an electrical wire, with at least one stack therebetween; and
comparing a first stack voltage, which is one of the stack voltages, with the other stack voltages, and controlling the turn-on or turn-off of the on-off switch installed on the electrical wire according to the comparison results.

6. The method of claim 5, wherein, in the controlling, if the voltage difference between the first stack voltage and at least one of the other stack voltages is equal to or larger than a preset threshold voltage, the on-off switch installed on the electrical wire for the stack pair having the first stack voltage is turned off, and if the voltage difference between the first stack voltage and at least one of the other stack voltages is smaller than the threshold voltage, the on-off switch is turned on.
